# EUROPÄISCHE PATENTSCHRIFT

(11) **EP 2 482 530 B1**
(45) Veröffentlichungstag und Bekanntmachung des Hinweises auf die Patenterteilung: **02.10.2013**
(21) Anmeldenummer: 11152206.6
(22) Anmeldetag: 26.01.2011
(51) Int. Cl.: H04M 1/725

(54) **Dynamische Bereitstellung von Client Funktionalität**
Dynamic provision of client functions
Préparation dynamique de la fonctionnalité client

(43) Veröffentlichungstag der Anmeldung: 01.08.2012
(73) Patentinhaber: Gigaset Communications GmbH, 81379 München (DE)
(72) Erfinder: Beckers, Michael, 46499, Hamminkeln (DE); Gröting, Claus, 46354, Südlohn (DE)
(74) Vertreter: Michalski Hüttermann & Partner Patentanwälte

(56) Entgegenhaltungen:
- EP-A2- 1 035 741
- EP-A2- 1 793 573
- US-A1- 2007 197 202

## Beschreibung

Die Erfindung betrifft ein Verfahren zum Bereitstellen einer Funktionalität in einer Mobilvorrichtung, ein Verfahren zum Bereitstellen einer Funktionalität für eine Mobilvorrichtung, eine Mobilvorrichtung und eine Festvorrichtung.

Um einen Informationsaustausch zwischen einer Mobilvorrichtung, beispielsweise einem Schnurlostelefon, und einer Festvorrichtung, beispielsweise einer Basisstation für die Mobilvorrichtung, zu ermöglichen, ist es erforderlich, dass die Mobilvorrichtung und die Festvorrichtung einander entsprechende Funktionalitäten aufweisen. Beispielsweise stellt die Festvorrichtung eine Funktionalität in Form eines Auswahlmenüs mit verschiedenen Menüpunkten bereit, die von der Mobilvorrichtung mit der entsprechenden Funktionalität angesprochen werden kann, um die in der Festvorrichtung zu den Menüpunkten dieses Auswahlmenüs hinterlegte Information zu lesen und der Festvorrichtung Änderungen der Information für einen der Menüpunkte mitzuteilen, so dass die Festvorrichtung die diesem Menüpunkt zugeordnete Information entsprechend ändern kann.

Aufgrund fortschreitender technischer Entwicklung in der Ausgestaltung von Festvorrichtungen und Mobilvorrichtungen können die Festvorrichtung und die Mobilvorrichtung unterschiedliche Funktionalitäten aufweisen und unterstützen. Die Unterschiedlichkeit der Festvorrichtung und der Mobilvorrichtungen ergibt sich beispielsweise durch deren unterschiedlichen Produktionszeitpunkt, der einen unterschiedlichen Stand bezüglich des Vorhandenseins an einander entsprechenden Leistungsmerkmalen zur Folge haben kann. So kann beispielsweise die Festvorrichtung eine zusätzliche Funktionalität bereitstellen, deren entsprechende Funktionalität in der Mobilvorrichtung nicht vorhanden ist, wodurch der Informationsaustausch zwischen der Festvorrichtung und der Mobilvorrichtung nur auf die in beiden Vorrichtungen vorhandenen Funktionalitäten beschränkt ist.

EP 1 793 573 A2 beschreibt ein Telefonhandgerät, eine Basis und ein zugeordnetes Verfahren zum Aktualisieren der Software des Handgeräts. Die Kommunikationsbasis weist eine Radioschnittstelle zum Kommunizieren mit einem Kommunikationsgerät, das mittels einer Softwareanwendung arbeitet, eine Ladegerätschaltung und Mittel zum Erfassen einer neuen Version der Software auf. Die Kommunikationsbasis weist Mittel zum Benachrichtigen des Geräts über die Verfügbarkeit der neuen Softwareversion über die Radiomittel und Mittel zum Senden der neuen Softwareversion an die Vorrichtung auf, wenn die Ladegerätschaltung mit der Batterie der Vorrichtung verbunden ist.

EP 1035 741 A2 beschreibt ein drahtloses Kommunikationssystem, das eine Basisstation und eine Vielzahl von drahtlosen Kommunikationsvorrichtungen aufweist. Die Basisstation kommuniziert mit der Vielzahl von drahtlosen Kommunikationsvorrichtungen und arbeitet, um eine Vielzahl von Vorrichtungseinstellungsdateien zu speichern und eine entsprechende Vorrichtungseinstellungsdatei an eine entsprechende drahtlose Kommnunikationsvorrichtung herunterzuladen. Jede drahtlose Kommunikationsvorrichtung arbeitet, um die entsprechende Vorrichtungseinstellungsdatei von der Basisstation zu empfangen und zu speichern.

US 2007/0197202 A2 beschreibt ein System und ein Verfahren zum Verwalten des Löschens und erneuten Ladens von Softwarcanwendungskomponenten auf eine drahtlose Vorrichtung, beispielsweise ein Handy, einen persönlichen Digitalassistenten, einen Pager oder eine andere Computerplattform. Die drahtlose Vorrichtung weist eine oder mehrere vorhandene ausführbare Softwareanwendungen auf, wobei jede Anwendung eine oder mehrere Anwendungskomponenten und anwendungszugeordnete Daten, beispielsweise Softwarelizenzen oder benutzerspezifische Daten, aufweist. Die drahtlose Vorrichtung löscht selektiv eine oder mehrere Anwendungskomponenten der vorhandenen Softwareanwendong ohne Verlust der anwendungszugeordneten Daten, um Ressourcen in der drahtlosen Vorrichtung freizugeben, und veranlasst selektiv eine Sicherungsvorrichtung, die mit einem drahtlosen Netzwerk gekoppelt ist, gelöschte Anwendungskomponenten zu senden, die notwendig sind, in der drahtlosen Vorrichtung erneut installiert zu werden, um die Anwendung auszuführen.

Es ist daher eine Aufgabe der Erfindung, einen Informationsaustausch zwischen einer Mobilvorrichtung und einer eine zusätzliche Funktionalität ausweisenden Festvorrichtung zu verbessern.

Diese Aufgabe wird durch ein Verfahren zum Bereitstellen einer Funktionalität in einer Mobilvorrichtung, ein Verfahren zum Bereitstellen einer Funktionalität für eine Mobilvorrichtung, eine Mobilvorrichtung und eine Festvorrichtung gemäß den unabhängigen Ansprüchen gelöst.

Gemäß einem Ausführungsbeispiel der Erfindung ist ein Verfahren zum Bereitstellen einer Funktionalität in einer Mobilvorrichtung bereitgestellt, wobei die Funktionalität der Mobilvorrichtung einer Funktionalität einer Festvorrichtung entspricht, wobei das Verfahren von der Mobilvorrichtung ausgeführt wird, wobei das Verfahren Laden von der Funktionalität der Mobilvorrichtung zugeordneten Funktionalitätsdaten und Bereitstellen der den Funktionalitätsdaten zugeordneten Funktionalität in der Mobilvorrichtung aufweist.

Gemäß einem weiteren Ausführungsbeispiel der Erfindung wird ein Verfahren zum Bereitstellen einer Funktionalität für eine Mobilvorrichtung bereitgestellt, wobei die Funktionalität der Mobilvorrichtung einer Funktionalität einer Festvorrichtung entspricht, wobei das Verfahren von der Festvorrichtung ausgeführt wird, wobei das Verfahren Empfangen einer Anfrage von der Mobilvorrichtung zum Laden von der Funktionalität der Mobilvorrichtung zugeordneten Funktionalitätsdaten und Bereitstellen der angefragten Funktionalitätsdaten für die Mobilvorrichtung basierend auf der Anfrage aufweist.

Gemäß einem weiteren Ausführungsbeispiel der Erfindung wird eine Mobilvorrichtung zum Bereitstellen einer Funktionalität bereitgestellt, wobei die Funktionalität der Mobilvorrichtung einer Funktionalität einer Festvorrichtung entspricht, wobei die Mobilvorrichtung eine Einheit zum Laden von der Funktionalität der Mobilvorrichtung zugeordneten Funktionalitätsdaten und eine Einheit zum Bereitstellen der den Funktionalitätsdaten zugeordneten Funktionalität in der Mobilvorrichtung aufweist.

Gemäß einem weiteren Ausführungsbeispiel der Erfindung wird eine Festvorrichtung zum Bereitstellen einer Funktionalität für eine Mobilvorrichtung bereitgestellt, wobei die Funktionalität der Mobilvorrichtung einer Funktionalität der Festvorrichtung entspricht, wobei die Festvorrichtung eine Einheit zum Empfangen einer Anfrage von der Mobilvorrichtung zum Laden von der Funktionalität der Mobilvorrichtung zugeordneten Funktionalitätsdaten und eine Einheit zum Bereitstellen der angefragten Funktionalitätsdaten aufweist.

Ein Verfahren zum Austauschen von Information zwischen einer Mobilvorrichtung und einer Festvorrichtung wird von einer oben beschriebenen Mobilvorrichtung und einer oben beschriebenen Festvorrichtung ausgeführt und weist zumindest einen der oben genannten Schritte auf.

Ein System zum Austauschen von Information zwischen einer Festvorrichtung und einer Mobilvorrichtung weist die oben beschriebene Mobilvorrichtung und die oben beschriebene Festvorrichtung auf.

In einem computerlesbaren Speichermedium gemäß einem Ausführungsbeispiel der Erfindung ist ein Programm zum Bereitstellen einer Funktionalität in einer Mobilvorrichtung oder ein Programm zum Bereitstellen einer Funktionalität für eine Mobilvorrichtung oder ein Programm zum Austauschen von Information zwischen einer Mobilvorrichtung und einer Festvorrichtung gespeichert, welches, wenn es von einem Prozessor ausgeführt wird, die oben beschriebenen Verfahrensschritte aufweist bzw. durchführt.

Ein Programm-Element (Computerprogramm-Element) gemäß einem Ausführungsbeispiel der Erfindung zum Bereitstellen einer Funktionalität in einer Mobilvorrichtung oder zum Bereitstellen einer Funktionalität für eine Mobilvorrichtung oder zum Austauschen von Information zwischen einer Mobilvorrichtung und einer Festvorrichtung weist die oben beschriebenen Verfahrensschritte auf (bzw. führt diese durch), wenn es von einem Prozessor ausgeführt wird.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden.

Im Zusammenhang mit der vorliegenden Erfindung kann der Begriff"Funktionalität" insbesondere eine (Text-basierte und/oder Graphik-basierte) Applikation einer Festvorrichtung oder einer Mobilvorrichtung bezeichnen, die mit einem Informationsaustausch zwischen der Mobilvorrichtung und der Festvorrichtung verbunden sein kann. Insbesondere kann die Funktionalität der Mobilvorrichtung eine Datenverwaltung von der Funktionalität zugeordneten Daten und/oder eine Steuerung und Anzeige einer Bedienoberfläche in der Mobilvorrichtung aufweisen. Die Funktionalität kann eine weitere bereits vorhandene Funktionalität erweitern (beispielsweise eine neuer, anzuzeigender Text) oder als eigenständige Funktionalität ausgebildet sein. Beispielsweise kann die Funktionalität ein neuer (insbesondere durch die Mobilvorrichtung editierbarer) Menüpunkt eines Auswahlmenüs sein, dem entsprechende Information zugeordnet sind.

Der Ausdruck "die Funktionalität der Mobilvorrichtung entspricht einer Funktionalität einer Festvorrichtung" kann insbesondere bezeichnen, dass die Mobilvorrichtung und die Festvorrichtung einander zugeordnete oder korrelierte Funktionalitäten aufweisen können, die ineinander greifen können, um einen Informationsaustausch zwischen der Mobilvorrichtung und der Festvorrichtung zu ermöglichen. Insbesondere kann die Festvorrichtung einen neuen Menüpunkt eines Auswahlmenüs unterstützen, auf den die Mobilvorrichtung mittels einer entsprechenden Funktionalität zugreifen, die in den Menüpunkt hinterlegte Information insbesondere Text-basiert und/oder graphisch anzeigen, editieren bzw. verändern, speichern und/oder (insbesondere verarbeitete) Information an die Festvorrichtung senden kann.

Der Begriff "Laden von Funktionalitätsdaten von der Festvorrichtung" kann insbesondere ein Senden einer Anfrage von der Mobilvorrichtung an die Festvorrichtung über die Funktionalitätsdaten und ein Empfangen der angefragten Funktionalitätsdaten durch die Mobilvorrichtung aufweisen. Insbesondere kann der Vorgang des Ladens durch eine Anfrage der Mobilvorrichtung getriggert oder initiiert werden. Insbesondere kann das Laden der Funktionalitätsdaten für jede Festvorrichtung ausgeführt werden, mit der die Mobilvorrichtung kommunizieren wird.

Gemäß den Ausführungsbeispielen der Erfindung können eine Mobilvorrichtung und eine Festvorrichtung kommunikativ miteinander gekoppelt sein, um Information auszutauschen. Um einen Informationsaustausch zwischen der Mobilvorrichtung und der Festvorrichtung unabhängig von in der Mobilvorrichtung vorhandenen Funktionalitäten zu ermöglichen, kann die Mobilvorrichtung dynamisch an eine neue, weitere Funktionalität einer Festvorrichtung angepasst werden. Die der Funktionalität der Festvorrichtung entsprechende Funktionalität der Mobilvorrichtung muss hierbei zunächst nicht in der Mobilvorrichtung vorhanden sein, sondern die Funktionalität kann bei Bedarf geladen und in der Mobilvorrichtung bereitgestellt werden. In diesem Zusammenhang kann die Festvorrichtung als Server für die Mobilvorrichtung dienen, und die Mobilvorrichtung kann ein Client für die Festvorrichtung darstellen.

Insbesondere muss es nicht erforderlich sein, die Mobilvorrichtung regelmäßig durch aufwändige Software-Aktualisierung der in der Mobilvorrichtung vorhandenen Funktionalitäten an die Festvorrichtung anzupassen, da im Falle eines Bedarfs der weiteren Funktionalität die Funktionalitätsdaten dieser Funktionalität selbständig geladen und in der Mobilvorrichtung bereitgestellt werden können. Folglich können die mit solchen Aktualisierungen verbundenen Kosten sowie ein damit verbundener Zeitaufwand erheblich reduziert werden.

Aufgrund der dynamischen Anpassung der Mobilvorrichtung an die Festvorrichtung kann es insbesondere möglich sein, dass die Festvorrichtung mit einer Vielzahl von unterschiedlichen Mobilvorrichtungen, die unterschiedliche Funktionalitäten aufweisen, Information austauschen kann, da die Festvorrichtung für die unterschiedlichen Mobilvorrichtungen die jeweils unterschiedliche Funktionalitäten, die in der entsprechenden Mobilvorrichtung nicht vorhanden sein können, bereitstellen kann.

Insbesondere kann es ferner möglich sein, dass eine Mobilvorrichtung an unterschiedliche Festvorrichtungen unabhängig von ihren vorhandenen Funktionalitäten kommunikativ gekoppelt werden kann, da sich die Mobilvorrichtung automatisch an die unterschiedlichen Funktionalitäten der unterschiedlichen Festvorrichtungen anpassen kann.

Im Weiteren werden weitere beispielhafte Ausführungsformen des Verfahrens zum Bereitstellen einer Funktionalität in einer Mobilvorrichtung beschrieben. Diese Ausführungsformen gelten auch für das Verfahren zum Bereitstellen einer Funktionalität für eine Mobilvorrichtung, die Mobilvorrichtung, die Festvorrichtung, das Verfahren zum Austauschen von Informationen, das System, das computerlesbare Speichermedium und das Programm-Element.

Das Verfahren kann ferner Anfragen von Information über von der Festvorrichtung bereitgestellte Funktionalitätsdaten und Vergleichen der angefragten Information über die von der Festvorrichtung bereitgestellten Funktionalitätsdaten mit Information einer Art der Mobilvorrichtung (insbesondere einer Identifikationsnummer oder einer produktionsbedingte Generationsnummer der Mobilvorrichtung) aufweisen, **wobei das Laden der** Funktionalitätsdaten basierend auf dem Vergleichen ausgeführt wird. Der Begriff "Art einer Mobilvorrichtung" kann einen produktionsbedingten Typ von Mobilvorrichtungen bezeichnen, dem bestimmte Funktionalitäten zugeordnet sein können. Insbesondere kann das Laden der Funktionalitätsdaten nach Feststellen eines Unterschieds zwischen von der Festvorrichtung empfangener Information und der Information über die Art der Mobilvorrichtung ausgeführt werden. In Falle, dass kein Unterschied zwischen den Informationen der Festvorrichtung und der Mobilvorrichtung festgestellt wird, kann die Mobilvorrichtung insbesondere entscheiden, dass keine Funktionalitätsdaten geladen werden. Die Festvorrichtung kann insbesondere eine Liste aufweisen, deren erster Eintrag eine Kennzeichnung der Art der Mobilvorrichtung (beispielsweise mittels einer Identifikationsnummer oder einer produktionsbedingte Generationsnummer) und deren zweiter Eintrag Kennzeichnungen der zugehörigen Funktionalitätsdaten aufweisen können, die von der Festvorrichtung bereitgestellt werden können. Diese Maßnahme kann es ermöglichen, dass die Mobilvorrichtung Kenntnis von der durch die Festvorrichtung bereitgestellten Funktionalitäten, und insbesondere von solchen Funktionalitäten, deren entsprechende Funktionalitäten nicht in der Mobilvorrichtung vorhanden sein können, erhalten kann. Ferner kann das Laden der Funktionalitätsdaten besonders effizient durchgeführt werden, da nur solche Funktionalitätsdaten geladen werden können, die in Mobilvorrichtung fehlen können.

Das Verfahren kann ferner Anfragen von Information über eine Art der Festvorrichtung und Empfangen sowie Speichern der angefragten Information über die Art der Festvorrichtung (von der Festvorrichtung) aufweisen. Dies kann insbesondere dadurch veranlasst werden, dass die Mobilvorrichtung von der Festvorrichtung eine Benachrichtigung erhält, dass die Festvorrichtung neue oder weitere, bisher nicht vorhandene Funktionalitätsdaten bereitstellen und somit selbst eine andere Art aufweisen kann. Das Anfragen und Speichern kann insbesondere das Laden der Funktionalitätsdaten injizieren.

Das Verfahren kann ferner Rücksetzen von in der Mobilvorrichtung vorhandenen Funktionalitätsdaten von zugeordneten Funktionalitäten in einen herstellungsbedingten Ausgangszustand vor dem Laden der Funktionalitätsdaten und insbesondere nach dem Speichern der Information über die Art der Festvorrichtung aufweisen, wodurch die Mobilvorrichtung nach einem weiteren Laden von Funktionalitätsdaten nur die ursprünglichen und die geladenen Funktionalitätsdaten, nicht aber früher geladene Funktionalitätsdaten aufweisen kann, so dass ein entsprechender Speicherbedarf der Mobilvorrichtung besonders gering sein kann. Das Rücksetzen kann insbesondere ausgeführt werden, wenn die gespeicherte Information über die Art der Festvorrichtung verschieden zu einer vorher gespeicherten Information über die Art der Festvorrichtung ist.

Das Laden der Funktionalitätsdaten kann in Übereinstimmung mit Eigenschaften der Mobilvorrichtung ausgeführt werden. Insbesondere können Eigenschaften der Mobilvorrichtung Geräte-bedingte Eigenschaften, wie beispielsweise ein bestimmtes Anzeigegerät der Mobilvorrichtung oder eine Eingabetastatur der Mobilvorrichtung, und Software-bedingte Eigenschaften der Mobilvorrichtung, wie beispielsweise ein von der Mobilvorrichtung unterstütztes Protokoll oder eine graphische Bedienoberfläche der Mobilvorrichtung, aufweisen. Die Mobilvorrichtung kann hierzu beispielsweise eine entsprechende Information an die Festvorrichtung senden, in der die Eigenschaften der Mobilvorrichtungen angezeigt werden können. Folglich kann das Laden der Funktionalität besonders effizient und angepasst an die technischen Spezifikationen der Mobilvorrichtung durchgeführt werden.

Insbesondere kann das Laden der Funktionalitätsdaten von der Festvorrichtung ein teilweises oder vollständiges Laden aller Funktionalitätsdaten (insbesondere in Übereinstimmung mit Geräte-bedingten und/oder Software-bedingten Eigenschaften der Mobilvorrichtung) aufweisen, die zum Ausführen der Funktionalität durch die Mobilvorrichtung erforderlich sein können. Dadurch kann die Mobilvorrichtung selektiv die fehlenden Funktionalitätsdaten der Funktionalität von der Festvorrichtung laden, so dass ein unnötiger Kapazitätsbedarf bei einem Austauschen der zu ladenden Funktionalitätsdaten vermieden werden kann.

Das Laden kann Empfangen der Funktionalitätsdaten von der Festvorrichtung oder Empfangen einer Anweisung zum Laden der Funktionalitätsdaten (beispielsweise einer URL) von einer Kommunikationsvorrichtung (insbesondere einem Router) von der Festvorrichtung und Empfangen der Funktionalitätsdaten von der Kommunikationsvorrichtung (insbesondere mittels WLAN) aufweisen. Somit kann die Festvorrichtung nicht nur Funktionalitäten, die von der Mobilvorrichtung angesprochen werden können, sondern auch die Funktionalitätsdaten der entsprechenden Funktionalität für die Mobilvorrichtung entweder selbst oder vermittelt durch die Kommunikationsvorrichtung bereitstellen.

Das Laden der Funktionalitätsdaten kann bei einem erstmaligen Aufbau einer Kommunikationsverbindung mit der Festvorrichtung, bei einem Synchronisieren der Mobilvorrichtung mit der Festvorrichtung (insbesondere nach einem Wechsel von einer Festvorrichtung zu einer weiteren Festvorrichtung) oder bei einem Aufbau einer aktiven (insbesondere dauerhaften) Kommunikationsverbindung zwischen der Mobilvorrichtung und der Festvorrichtung ausgeführt werden. Der Begriff "erstmaliger Aufbau einer Kommunikationsverbindung" kann insbesondere ein Anmelden der Mobilvorrichtung bei der Festvorrichtung bezeichnen, bei der sich die Mobilvorrichtung für eine weitere Kommunikation mit der Festvorrichtung authentifizieren kann. Der Begriff "Synchronisieren der Mobilvorrichtung mit der Festvorrichtung" kann insbesondere ein Abgleichen von Information, insbesondere von Konfigurationsdaten wie Datum, Zeitpunkt und/oder Ort, zwischen beiden Vorrichtungen bezeichnen. **Der Begriff** "aktive Kommunikationsverbindung" kann insbesondere eine solche Kommunikationsverbindung zwischen der Mobilvorrichtung und der Festvorrichtung bezeichnen, bei der Information zwischen beiden Vorrichtungen ausgetauscht werden kann. Insbesondere kann eine aktive Kommunikationsverbindung zwischen beiden Vorrichtungen ein Telefonat zwischen der Mobilvorrichtung und einer zweiten Mobilvorrichtung, das von der Festvorrichtung vermittelt wird, oder ein Datenaustausch zwischen der Mobilvorrichtung und der Festvorrichtung bezeichnen. Ein erstmaliger Kommunikationsaufbau mit der Festvorrichtung kann insbesondere vor einem Synchronisieren mit der Festvorrichtung und/oder einer aktiven Kommunikationsverbindung mit der Festvorrichtung erfolgen. Ein Synchronisieren mit der Festvorrichtung kann insbesondere vor, nach oder während einer aktiven Kommunikationsverbindung mit der Festvorrichtung (oder einer weiteren Festvorrichtung) erfolgen. Diese Maßnahme kann es folglich ermöglichen, dass die von der Mobilvorrichtung bereitgestellten Funktionalitäten für einen möglichen Informationsaustausch mit der Festvorrichtung stets optimal an alle Funktionalitäten der Festvorrichtung angepasst sein können. Ferner können alle in der Festvorrichtung vorhandenen Funktionalitäten für einen Informationsaustausch zwischen der Mobilvorrichtung und der Festvorrichtung verwendet werden, so dass der Informationsaustausch mit der Festvorrichtung erheblich verbessert wird.

Insbesondere können die geladenen Funktionalitätsdaten in der Mobilvorrichtung (insbesondere vor dem Bereitstellen der Funktionalität in der Mobilvorrichtung insbesondere zwischen-) gespeichert werden, wodurch ein Verlust der geladenen Funktionalitätsdaten vor einem Bereitstellen der Funktionalität in der Mobilvorrichtung beispielsweise während eines Geräteausfalls der Mobilvorrichtung verhindert werden kann. Auch kann ein erneutes Bereitstellen der Funktionalität in der Mobilvorrichtung besonders einfach ausgeführt werden, da in diesem Fall lediglich auf die bereits geladenen Funktionalitätsdaten zurückgegriffen werden muss. Insbesondere kann ein Speicher der Mobilvorrichtung, in dem die Funktionalitätsdaten gespeichert wurden, nach einem Bereitstellen der Funktionalität in der Mobilvorrichtung freigegeben werden, wodurch eine unnötige Speicherplatzbelegung in der Mobilvorrichtung vermieden werden kann.

Insbesondere können die geladenen Funktionalitätsdaten Anweisungen zum Konfigurieren der Funktionalität in der Mobilvorrichtung, zum Ausführen der konfigurierten Funktionalität, zum Implementieren der Daten in in der Mobilvorrichtung vorhandene Funktionalitätsdaten von zugeordneten Funktionalitäten, und zum Ausführen der bereitgestellten Funktionalität aufweisen. Die Funktionalitätsdaten können zusätzliche Anzeige-relevante Information (beispielsweise graphische Symbole, Bilder und/oder Text), die während eines Ausführens der Funktionalität einem Benutzer der Mobilvorrichtung angezeigt werden können, und/oder Referenzierungen von Teilen der Anweisungen und/oder der vorhandenen Funktionalitätsdaten aufweisen, um auf diese während eines Ausführens der Funktionalität zurückgreifen zu können. Insbesondere können die Daten die Form eines Skripts oder einer Tabelle mit Binärwerten aufweisen. Insbesondere können die Daten zum Ausführen der konfigurierten Funktionalität das Verarbeiten von Information in der Mobilvorrichtung, das Speichern von Information in der Mobilvorrichtung, das Anzeigen von Information in der Mobilvorrichtung und/oder das Austauschen von Information mit der Festvorrichtung betreffen.

Die Funktionalitätsdaten können in Übereinstimmung mit einem Format und/oder einer Sprache der in der Mobilvorrichtung vorhandenen Funktionalitätsdaten und/oder einem von der Mobilvorrichtung unterstütztem (Kommunikations-) Protokoll geladen werden, wodurch die geladenen Funktionalitätsdaten und die in der Mobilvorrichtung vorhandenen Funktionalitätsdaten kompatibel sein können und ein aufwändiges Abbilden oder Konvertieren der Funktionalitätsdaten in das Format, die Sprache und/oder das Protokoll der Mobilvorrichtung vermieden werden kann. Folglich können die Funktionalitätsdaten in Übereinstimmung mit den verschiedenen Arten von Mobilvorrichtungen, die jeweils eine unterschiedliche Sprache, ein unterschiedliches Datenformat und/oder ein unterschiedliches Protokoll unterstützen können, erstellt und von der Festvorrichtung bereitgestellt werden. Beispielsweise kann eine Adressierung oder Referenzierung von einem Text-basierten Objekt, beispielsweise einer Überschrift eines Menüpunkts, der Funktionalitätsdaten unter Verwendung einer Zahl in der Sprache der vorhandenen Funktionalitätsdaten und dem unterstützten Protokoll der Mobilvorrichtung erfolgen, so dass die Mobilvorrichtung diese Referenzierung ohne zusätzliche Konvertierung verstehen kann.

Alternativ können die Funktionalitätsdaten in einem allgemein definierten Format und/oder einer allgemein definierten Sprache, das bzw. die unabhängig von einem Format und/oder einer Sprache der in der Mobilvorrichtung vorhandenen Funktionalitätsdaten sein kann, und/oder in einem allgemein gültigen Protokoll ohne zusätzliche Konvertierung in das Format und/oder die Sprache der Funktionalitätsdaten der Mobilvorrichtung und/oder das von der Mobilvorrichtung unterstützte Protokoll geladen werden, wodurch die Funktionalitätsdaten zeitlich unveränderlich und daher ohne Aufwand bereitgestellt werden können. Diese Art der Bereitstellung der Funktionalitätsdaten kann allerdings eine Flexibilität der Definition der Funktionalitätsdaten reduzieren, da Änderungen von Definitionen der Sprache der Funktionalitätsdaten oder des Protokolls nicht möglich sein können. Beispielsweise kann die Referenzierung von dem Text-basierten Objekt der Funktionalitätsdaten unter Verwendung einer Zahl erfolgen, die für die Sprache und/oder das Protokoll aller Arten von Mobilvorrichtungen identisch sein kann.

Alternativ können die Funktionalitätsdaten in einem Format und/oder einer Sprache und/oder einem Protokoll geladen und in ein weiteres Format und/oder eine weitere Sprache der in der Mobilvorrichtung vorhandenen Funktionalitätsdaten und/oder in ein von der Mobilvorrichtung unterstütztes Protokoll konvertiert werden, wodurch die Definition der Funktionalitätsdaten besonders flexibel erfolgen kann. Diese Art der Datenbereitstellung durch die Festvorrichtung kann allerdings sehr aufwändig sein, und es muss ein zusätzlicher Konvertierungsalgorithmus in der Mobilvorrichtung vorhanden sein. Beispielsweise kann die Referenzierung von dem Text-basierten Objekt der Funktionalitätsdaten unter Verwendung einer Zahl erfolgen, die in der Mobilvorrichtung in eine andere Zahl konvertiert werden kann.

Das Bereitstellen der Funktionalität kann ein Implementieren der geladenen Funktionalitätsdaten in in der Mobilvorrichtung vorhandene Funktionalitätsdaten von zugeordneten Funktionalitäten aufweisen. Der Begriff "Implementieren von Funktionalitätsdaten in in der Mobilvorrichtung vorhandene Funktionalitätsdaten" kann insbesondere ein Ergänzen oder Ändern der vorhandenen Funktionalitätsdaten bezeichnen. Ein Ergänzen der Funktionalitätsdaten kann insbesondere ein Hinzufügen der neuen Funktionalitätsdaten zu den vorhandenen Funktionalitätsdaten aufweisen. Ein Ändern der Funktionalitätsdaten kann insbesondere ein (teilweises) Ersetzen der vorhandenen Funktionalitätsdaten aufweisen, so dass insbesondere sowohl die bereitgestellte Funktionalität als auch die vorhandenen Funktionalitäten, die den geänderten Funktionalitätsdaten zugeordnet sein können, ausgeführt werden können. Durch diese Maßnahme können die in der Mobilvorrichtung vorhandenen Funktionalitätsdaten sukzessive erweitert und gegebenenfalls angepasst werden, ohne dass die bereits in der Mobilvorrichtung vorhandenen Funktionalitätsdaten vollständig ersetzt werden müssen. Folglich kann das Bereitstellen der Funktionalitätsdaten besonders einfach und effizient ausgeführt werden.

Im Weiteren werden weitere exemplarische Ausführungsformen des Verfahrens zum Bereitstellen einer Funktionalität für eine Mobilvorrichtung beschrieben. Diese Ausführungsformen gelten auch für das Verfahren zum Bereitstellen einer Funktionalität in einer Mobilvorrichtung, die Mobilvorrichtung, die Festvorrichtung, das Verfahren zum Austauschen von Information, das System, das computerlesbare Speichermedium und das Programm-Element.

Insbesondere kann das Verfahren ein Auswählen der (explizit) angefragten Funktionalitätsdaten aus einer Vielzahl von Funktionalitätsdaten, die von der Festvorrichtung bereitgestellt werden, aufweisen, wobei die Vielzahl von Funktionalitätsdaten einer Vielzahl von Funktionalitäten für Mobilvorrichtungen zugeordnet sein können. Folglich kann die Festvorrichtung selektiv die angefragten Funktionalitätsdaten der in der Mobilvorrichtung fehlenden Funktionalität für die Mobilvorrichtung bereitstellen, wodurch ein unnötiger Kapazitätsbedarf vermieden werden kann, der beispielsweise bei einem Laden aller Funktionalitätsdaten durch die Mobilvorrichtung und beim Speichern in der Mobilvorrichtung auftreten würde.

Das Verfahren kann ein Auswählen einer Gruppe aus einer Vielzahl von Gruppen aufweisen, die Funktionalitätsdaten von zugeordneten Funktionalitäten für jeweils unterschiedliche Arten von Mobilvorrichtungen aufweisen. Dadurch können die von der Mobilvorrichtung angefragten Funktionalitätsdaten besonders einfach ausgewählt werden, da die Festvorrichtung die Gruppe von Funktionalitätsdaten auswählen kann, die der Art der anfragenden Mobilvorrichtung entsprechen kann. Insbesondere kann die Mobilvorrichtung eine entsprechende Information eine Geräteidentifikationsnummer oder eine produktionsbedingte Generationsnummer der Mobilvorrichtung an die Festvorrichtung senden, so dass die Festvorrichtung basierend auf der empfangenden Information das Auswählen der Gruppe und das Bereitstellen der Funktionalitätsdaten ausführen kann.

Insbesondere kann die Festvorrichtung keine Kenntnis über die Art und den Inhalt der bereitgestellten Funktionalitätsdaten und/oder die Gruppen haben, wodurch eine Rechenkapazität der Festvorrichtung beim Auswählen der Funktionalitätsdaten besonders gering ist. Insbesondere kann die Festvorrichtung die Vielzahl von Funktionalitäten von einer weiteren Vorrichtung erhalten und diese speichern, um die Funktionalitätsdaten für die Mobilvorrichtung bereitstellen zu können.

Das Bereitstellen der Funktionalitätsdaten kann Senden der Funktionalitätsdaten an die Mobilvorrichtung aufweisen. Dies stellt ein besonders einfaches Laden der Funktionalitätsdaten ohne Involvieren weiterer Vorrichtungen bereit.

Das Bereitstellen der Funktionalitätsdaten kann Senden einer Anweisung zum Laden der Funktionalitätsdaten von einer Kommunikationsvorrichtung an die Mobilvorrichtung (und optional Senden der Funktionalitätsdaten an die Kommunikationsvorrichtung) aufweisen, wodurch eine Speicherkapazität der Festvorrichtung klein ausgebildet sein kann. Auch kann die Festvorrichtung keine Information über die Art der und den Inhalt der Funktionalitätsdaten aufweisen. Die Kommunikationsvorrichtung kann die Funktionalitätsdaten von der Festvorrichtung oder von einer weiteren Vorrichtung erhalten.

Im Weiteren werden weitere exemplarische Ausführungsformen der Mobilvorrichtung und/oder der Festvorrichtung beschrieben. Diese Ausführungsformen gelten auch für das Verfahren zum Bereitstellen einer Funktionalität in einer Mobilvorrichtung, das Verfahren zum Bereitstellen einer Funktionalität für eine Mobilvorrichtung, das Verfahren zum Austauschen von Information, das System, das computerlesbare Speichermedium und das Programm-Element.

Die Mobilvorrichtung kann als Schnurlostelefon und/oder die Festvorrichtung kann als kabelgebundene Basisstation für eine Mobilvorrichtung oder als Schnurtelefon ausgebildet sein.

Die Mobilvorrichtung und/oder die Festvorrichtung können nach einem "Digital Enhanced Cordless Telecommunications" (DECT)-Standard, insbesondere nach einem "Cordless Advanced TechnologyInternet and Quality"(CAT-iq)-Standard ausgebildet sein. Folglich kann eine Kommunikation zwischen der Mobilvorrichtung und der Festvorrichtung auf einem funktionalen Protokoll beruhen, das ein Verarbeiten von Information in der Mobilvorrichtung ermöglichen kann.

Im Weiteren werden exemplarische Ausführungsformen des Verfahrens zum Austauschen von Information beschrieben. Diese Ausführungsformen gelten auch für das Verfahren zum Bereitstellen einer Funktionalität in einer Mobilvorrichtung, das Verfahren zum Bereitstellen einer Funktionalität für eine Mobilvorrichtung, die Mobilvorrichtung, die Festvorrichtung, das System, das computerlesbare Speichermedium und das Programm-Element.

Das Verfahren kann ferner ein Ausführen der Funktionalität, insbesondere zumindest eins aus der Gruppe von Anzeigen einer Bedienoberfläche der Funktionalität für einen Benutzer der Mobilvorrichtung, Anfragen von Information von der Festvorrichtung unter Verwendung der Funktionalität, Verarbeiten von Information unter Verwendung der Funktionalität, (insbesondere text-basiertes und/oder graphisches) Anzeigen von (insbesondere der angefragten) Information unter Verwendung der Funktionalität, und Senden von (insbesondere der verarbeiteten) Information an die Festvorrichtung unter Verwendung der Funktionalität, aufweisen. Ein Anzeigen der Bedienoberfläche und/oder der Information kann beispielsweise mittels eines Anzeigegeräts erfolgen, das in der Mobilvorrichtung integriert oder als ein externes der Mobilvorrichtung zugeordnetes Gerät ausgebildet sein kann. Insbesondere kann die der neuen Funktionalität der Festvorrichtung zugeordnete Information durch die Mobilvorrichtung selbst geändert werden, wodurch die Mobilvorrichtung aktiv die Verarbeitung der durch die Festvorrichtung bereitgestellten Information ausführen kann.

Im Folgenden werden exemplarische Ausführungsbeispiele der vorliegenden Erfindung mit Verweis auf die folgenden Figuren detailliert beschrieben.
Fig. 1 und 2 zeigen Flussdiagramme, die Verfahren zum Bereitstellen einer Funktionalität in einer Mobilvorrichtung gemäß exemplarischen Ausführungsbeispielen der Erfindung veranschaulichen.
Fig. 3 zeigt ein Blockdiagramm der Mobilvorrichtung in Fig. 1 und 2 gemäß einem exemplarischen Ausführungsbeispiel der Erfindung.
Fig. 4 zeigt ein Blockdiagramm einer Struktur von Daten, die in der Mobilvorrichtung in Fig. 3 vor einem Implementieren von geladenen Funktionalitätsdaten vorhanden sind.
Fig. 5 bis 7 zeigen Flussdiagramme, die ein Verfahren zum Bereitstellen einer Funktionalität in einer Mobilvorrichtung gemäß einem weiteren exemplarischen Ausführungsbeispiel veranschaulichen.

Die Darstellungen in den Figuren sind schematisch und nicht maßstabsgetreu. Gleiche oder ähnliche Komponenten in unterschiedlichen Figuren sind mit gleichen Bezugsziffern versehen oder mit Bezugsziffern, deren erste Zahl sich unterscheidet.

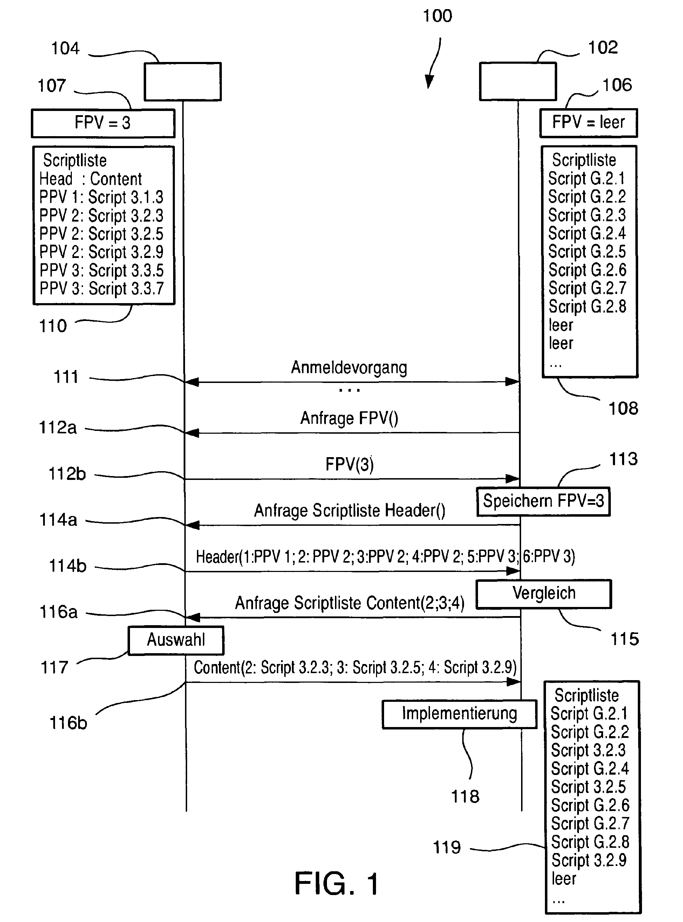

In einem in Fig. 1 gezeigten System 100 zum Austauschen von Information ist eine als Schnurlostelefon ausgebildete Mobilvorrichtung 102 kommunikativ mit einer als Basisstation ausgebildeten Festvorrichtung 104 gekoppelt. Sowohl die Festvorrichtung 104 als auch die Mobilvorrichtung 102 sind nach dem DECT-Standard und dem CAT-iq-Standard ausgebildet. Die Festvorrichtung 104 arbeitet als Server für die Mobilvorrichtung 102, die sowohl Funktionalitäten für die Mobilvorrichtung 102 als auch Information, die den Funktionalitäten zugeordnet sind, bereitstellt. Die Mobilvorrichtung 102 stellt einen Client für die Festvorrichtung dar.

Die Mobilvorrichtung 102 hat eine Generationsnummer "2", und die Festvorrichtung 104 hat eine Generationsnummer "3", so dass die Mobilvorrichtung 102 produktionsälter als die Festvorrichtung 104 ist. Die Mobilvorrichtung 102 und die Festvorrichtung 104 weisen gespeicherte Information 106, 107 über die Generationsnummer der Festvorrichtung 104 auf. In der Festvorrichtung 104 ist die Information 107 entsprechend belegt, während in der Mobilvorrichtung 102 die Information 106 nicht belegt ist.

Die Mobilvorrichtung 102 weist Funktionalitäten auf, die mit "G.2.1", "G.2.2", "G.2.3", "G.2.4", "G.2.5", "G.2.6", "G.2.7" und "G.2.8" bezeichnet sind. In der Festvorrichtung 104 werden Funktionalitätsdaten für weitere Funktionalitäten für Mobilvorrichtungen bereitgestellt, die mit "3.1.3", "3.2.3", "3.2.5", "3.2.9", "3.3.5" und "3.3.7" gekennzeichnet sind. Die Funktionalitätsdaten "3.1.3" sind für eine Mobilvorrichtung einer Generationsnummer "1" geeignet, die Funktionalitätsdaten "3.2.3", "3.2.5" und "3.2.9" sind für eine Mobilvorrichtung einer Generationsnummer "2" geeignet, und die Funktionalitätsdaten "3.3.7" sind für eine Mobilvorrichtung einer Generationsnummer "3" geeignet. Entsprechend der Generationsnummern der Mobilvorrichtungen sind die Funktionalitätsdaten in drei Gruppen unterteilt. Die Funktionalitäten der Mobilvorrichtung 102 beziehungsweise der Festvorrichtung 104 sind jeweils unterschiedlich.

Ferner weist die Mobilvorrichtung 102 eine Liste 108 über in der Mobilvorrichtung 102 vorhandene Funktionalitätsdaten auf, die aus den Kennzeichnungen der Funktionalitätsdaten besteht. Die Festvorrichtung 104 weist eine Liste 110 über in der Festvorrichtung 102 bereitgestellten Funktionalitätsdaten auf, die zweiteilig strukturiert ist. Ein erster Eintrag enthält eine Information über eine Generationsnummer von Mobilvorrichtungen, und ein zweiter Eintrag weist die Kennzeichnung der zugehörigen Funktionalitätsdaten aus.

In einem ersten Schritt 111 eines Verfahrens zum Bereitstellen einer Funktionalität in einer Mobilvorrichtung 102 gemäß einem Ausführungsbeispiel meldet sich die Mobilvorrichtung 102 bei der Festvorrichtung 104 an. In einem Schritt 112a sendet die Mobilvorrichtung 102 eine Anfrage an die Festvorrichtung 104 bezüglich von Information über die Generationsnummer der Festvorrichtung 104. Die Festvorrichtung 104 sendet daraufhin in einem Schritt 112b die angefragte Information an die Mobilvorrichtung 102, die diese Information dann in einem Schritt 113 speichert.

In einem Schritt 114a sendet die Mobilvorrichtung 102 die Anfrage über die Festvorrichtung bereitgestellten Funktionalitätsdaten, indem die Mobilvorrichtung 102 die ersten Einträge der Liste 110 anfordert. In einem Schritt 114b sendet die Festvorrichtung 104 die entsprechende Information an die Mobilvorrichtung 102.

In einem Schritt 115 vergleicht die Mobilvorrichtung 102 die empfangenen Generationsnummern von Mobilvorrichtungen, die jeweils einem Satz von Funktionalitätsdaten zugeordnet sind, mit einer Information über die Art der Mobilvorrichtung 102, also mit der Generationsnummer "2" der Mobilvorrichtung 102. Die Mobilvorrichtung 102 entscheidet, dass die Festvorrichtung 104 drei Sätze von (mit einer allgemeine Kennung gekennzeichneten) Funktionalitätsdaten gespeichert hat, die die Mobilvorrichtung 102 mit der Generationsnummer "2" noch nicht besitzt, aber für einen Informationsaustausch mit der Festvorrichtung 104 der Generationsnummer "3" benötigt.

In einem weiteren Schritt 116a sendet die Mobilvorrichtung 102 eine Anfrage an die Festvorrichtung 104 über in der Festvorrichtung 104 zusätzliche Funktionalitätsdaten basierend auf dem Vergleich, indem die Mobilvorrichtung 102 die allgemeinen Kennungen der Funktionalitätsdaten an die Festvorrichtung 104 sendet. Die Mobilvorrichtung 102 empfängt die Funktionalitätsdaten in einem Schritt 116b von der Festvorrichtung 104. Hierbei wählt die Festvorrichtung 104 in einem Schritt 117 basierend auf der empfangenen Anfrage die angefragten Funktionalitätsdaten aus der Vielzahl von in der Festvorrichtung 104 gespeicherten Funktionalitätsdaten aus.

Alternativ kann die Mobilvorrichtung 102 nicht eine direkte Anfrage der fehlenden Funktionalitätsdaten senden, sondern eine Information über die Generationsnummer der Mobilvorrichtung 102 an die Festvorrichtung 104 senden. Die Festvorrichtung 104 wählt dann aus den drei Gruppen, in denen die entsprechenden Funktionalitätsdaten nach Generationsnummern von Mobilvorrichtungen zusammengefasst sind, diejenige Gruppe aus, die der in der Anfrage enthaltenen Generationsnummer "2" der Mobilvorrichtung 102 entspricht.

In einem Schritt 118 implementiert die Mobilvorrichtung die empfangenen Funktionalitätsdaten in die bereits in der Mobilvorrichtung 102 vorhandenen Funktionalitätsdaten, die weiteren Funktionalitäten zugeordnet sind. Dazu werden die in der Mobilvorrichtung 102 vorhandenen Funktionalitätsdaten ergänzt bzw. verändert. Die in der Mobilvorrichtung mit "G.2.3" beziehungsweise "G.2.5" bezeichneten, vorhanden Funktionalitätsdaten werden durch die mit "3.2.3" beziehungsweise "3.2.5" gekennzeichneten Funktionalitätsdaten ausgetauscht. Die mit "3.2.9" gekennzeichneten Funktionalitätsdaten werden an die in der Mobilvorrichtung 102 vorhanden und modifizierten Funktionalitätsdaten angefügt. Eine entsprechend aktualisierte Liste der Funktionalitätsdaten ist mit der Bezugsziffer 119 bezeichnet.

Nach dem Implementieren der Funktionalitätsdaten in der Mobilvorrichtung 102 hat die Mobilvorrichtung 102 Kenntnis über die vorhandenen neuen Funktionalitäten und kann entsprechend Information von der Festvorrichtung unter Verwendung der geladenen Funktionalitäten laden, anzeigen, editieren und speichern. Das Laden, Anzeigen, Editieren und Speichern der Information erfolgt mittels einer bereits vorhandenen und durch die geladenen Funktionalitätsdaten erweiterten Bedienoberfläche.

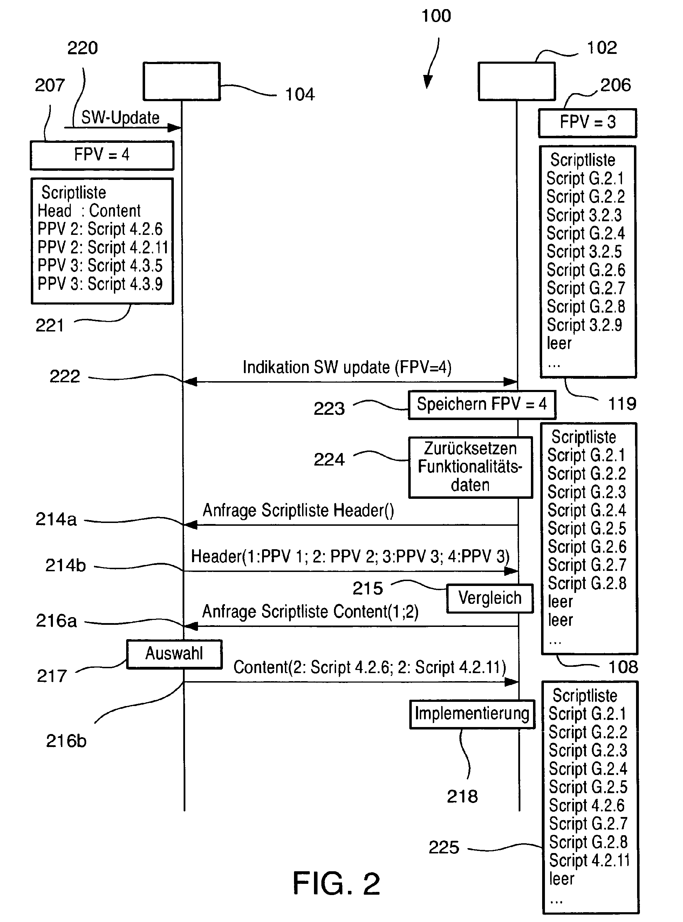

Fig. 2 zeigt ein Verfahren zum Bereitstellen von Funktionalitäten in einer Mobilvorrichtung gemäß einem weiteren Ausführungsbeispiel der Erfindung. Ein Verfahrensablauf dieses Verfahrens schließt sich an den in Fig. 1 gezeigten Verfahrensablauf an.

In einem Schritt 219 empfängt die Festvorrichtung 104 ein Software-Update, bei dem die von der Festvorrichtung 104 unterstützten Funktionalitäten aktualisiert werden. Folglich aktualisiert die Festvorrichtung 104 ihre Generationsnummer von "3" auf "4" und speichert die entsprechende Information 207.

In der Festvorrichtung 104 werden zusätzlich zu den Funktionalitätsdaten aus Fig. 1 Funktionalitätsdaten für Funktionalitäten von Mobilvorrichtungen bereitgestellt, die mit "4.2.6", "4.2.11", "4.3.5" und "4.3.9" bezeichnet sind. Die Funktionalitätsdaten "4.2.6" und "4.2.11 sind für eine Mobilvorrichtung der Generationsnummer "2" geeignet, und die Funktionalitätsdaten "4.3.5" und "4.3.9" sind für eine Mobilvorrichtung der Generationsnummer "3" geeignet. Entsprechend den Generationsnummern der Mobilvorrichtungen sind die Funktionalitätsdaten in zwei Gruppen unterteilt. Eine Liste 221 über die Funktionalitätsdaten der Festvorrichtung 104 wird entsprechend erstellt und ist wie die Liste 110 strukturiert.

In einem Schritt 221 sendet die Festvorrichtung Information an die Mobilvorrichtung 102, dass die Festvorrichtung 104 ein Software Update erhalten hat. Die Mobilvorrichtung 102 sendet entweder gleich und zeitversetzt eine Anfrage an die Festvorrichtung 104 bezüglich von Information über die Generationsnummer der Festvorrichtung 104. Die Festvorrichtung 104 sendet daraufhin die angefragte Information an die Mobilvorrichtung 102, die diese Information dann in einem Schritt 221 speichert.

In einem Schritt 224 setzt die Mobilvorrichtung, veranlasst durch die neue Generationsnummer der Festvorrichtung 104, die in der Mobilvorrichtung 102 vorhandenen Funktionalitätsdaten in einem Ausgangszustand zurück, der produktionsbedingt in der Mobilvorrichtung vorhanden war. Entsprechend wird die Liste 118 in die Liste 108 umgewandelt.

Die Schritte 214a bis 218 sind ähnlich wie Schritte 114a bis 118 bis auf die Tatsache, dass die Funktionalitätsdaten "4.2.6" und "4.2.11" ausgewählt, gesendet und implementiert werden. Dabei werden die in der Mobilvorrichtung 102 vorhandenen Funktionalitätsdaten um die mit "4.2.11" bezeichneten Funktionalitätsdaten ergänzt und die vorhandenen Funktionalitätsdaten "G.2.6" durch die mit "4.2.6" gekennzeichneten Funktionalitätsdaten ausgetauscht. Eine entsprechend aktualisierte Liste der Funktionalitätsdaten ist mit der Bezugsziffer 225 bezeichnet.

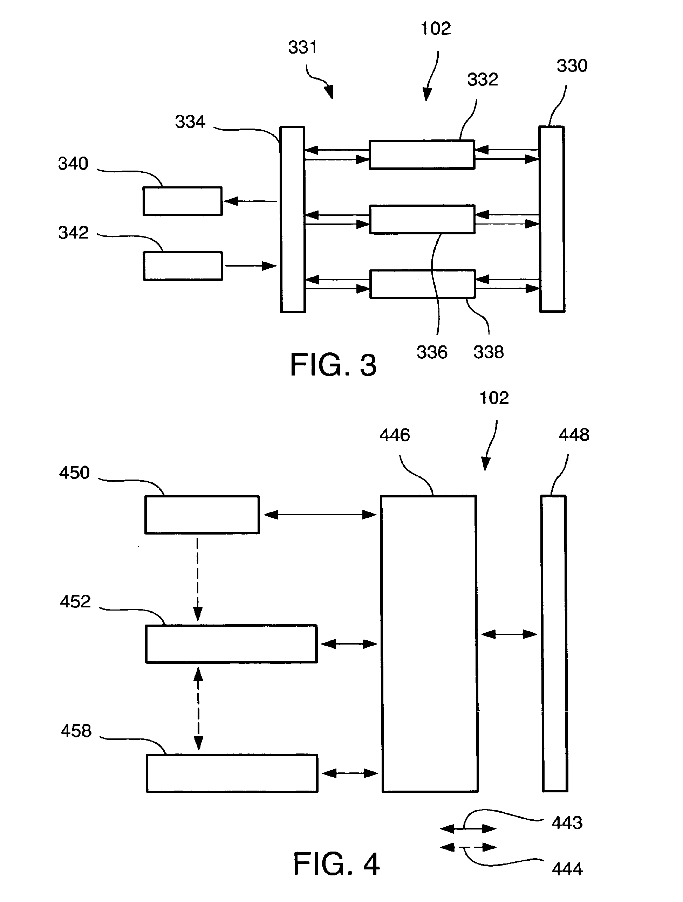

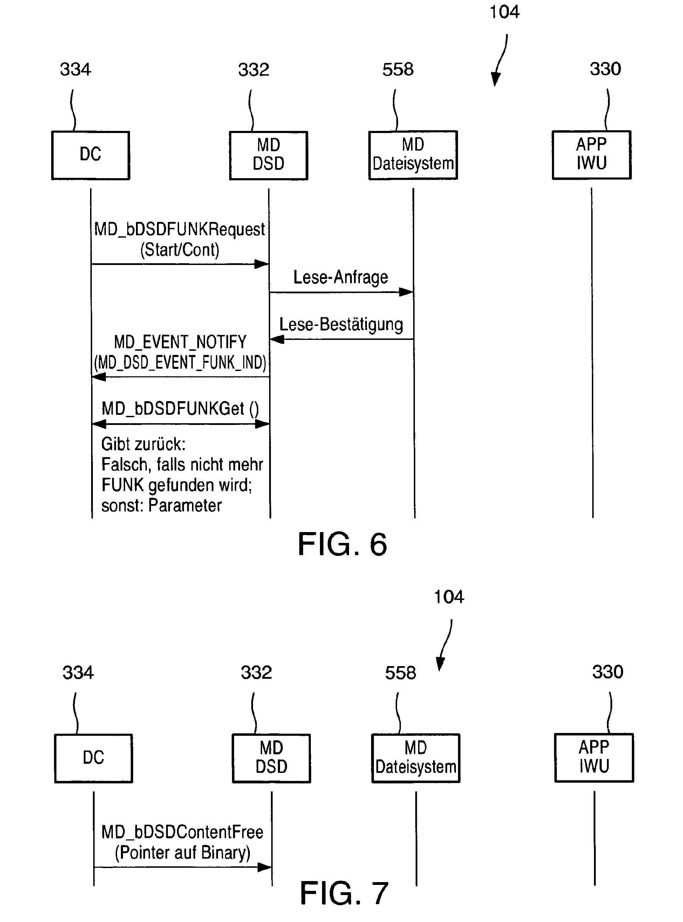

Fig. 3 zeigt ein Blockdiagramm der Mobilvorrichtung 102 gemäß einem exemplarischen Ausführungsbeispiel der Erfindung. Die Mobilvorrichtung 102 weist eine Schnittstelleneinheit 330 "App - IWU" zum Senden von Information an und zum Empfangen von Information von der Festvorrichtung 104 auf. Die Mobilvorrichtung 102 weist ferner einen Prozessor 331 mit funktionalen Komponenten 332-338 auf. Eine e Austauschverwaltungseinheit 332 ("MD-DSD") ist konfiguriert, den Austausch der Funktionalitätsdaten zwischen der Festvorrichtung 104 und einer Steuereinheit 334 ("DC & ANZEIGEN") zu verwalten und der Steuereinheit 334 die Funktionalitätsdaten auf Anfrage bereitzustellen. Die Steuereinheit 334 ist konfiguriert, die von der Festvorrichtung 104 geladenen Funktionalitätsdaten in die in der Mobilvorrichtung 102 vorhandenen Funktionalitätsdaten zu implementieren bzw. die geladenen Funktionalitätsdaten zu aktivieren (Fig. 6) und das Zugreifen auf die implementierten Funktionalitätsdaten während eines Ausführens der Funktionalität zu ermöglichen. Dazu ist die Steuereinheit 334 konfiguriert, die geladenen Funktionalitätsdaten zu interpretieren. Die Steuereinheit 334 ist auch konfiguriert, eine mittels der implementierten Funktionalität angefragte Kommunikationsverbindung mit der Festvorrichtung 104 aufzubauen. Eine Daten-Eingangs/Ausgangs-Einheit 336 ("DATEN-I/O") ist konfiguriert, einen protokollspezifischen Datenaustausch zwischen der Mobilvorrichtung 102 und der Festvorrichtung 104 bereitzustellen. Eine Protokolleinheit 338 ("PROTOKOLL") ist konfiguriert, protokollspezifische Verbindungsaufbautechniken einer Kommunikationsverbindung von der Mobilvorrichtung 102 mit der Festvorrichtung 104 bereitzustellen. Die jetzt mit dem Bezugszeichen 340 versehende Anzeigeeinheit 340 und die jetzt mit dem Bezugszeichen 342 versehende Eingabetastatur sind mit der Steuereinheit 334 kommunikativ gekoppelt. Die Anzeigeeinheit 340 ist konfiguriert, Information, die einem Benutzer der Mobilvorrichtung 102 auf der Anzeigeeinheit 340 angezeigt werden sollen, von der Steuereinheit 334 zu empfangen und diese anzuzeigen. Die Eingabetastatur 342 ist konfiguriert, über die Eingabetastatur 342 eingegebene Information, die entweder auf der Anzeigeeinheit 340 dargestellt oder durch die Steuereinheit 334 weiterverarbeitet oder an die Festvorrichtung 104 gesendet werden sollen, zu senden. Die Mobilvorrichtung 102 weist ebenfalls einen Speicher auf, in dem Daten, wie beispielsweise die Funktionalitätsdaten und die den Funktionalitäten zugeordneten Information, gespeichert werden.

Fig. 4 ist ein Blockdiagram einer Struktur der in der Mobilvorrichtung 102 vorhandenen Daten vor einem Implementieren der geladenen Funktionalitätsdaten, das die zwischen den Daten und den Komponenten der Mobilvorrichtung 102 bestehenden funktionalen Beziehungen (durchgehender Pfeil 443) und logischen Beziehungen (gestrichelter Pfeil 444) veranschaulicht. Zur Einfachheit der Darstellung ist die Mobilvorrichtung 102 in zwei funktionale Komponenten, nämlich die Einheit 446 ("Dialog Control & Steuerungen"), die die Steuereinheit 434 und alle für die Bereitstellung der Funktionalität in der Mobilvorrichtung 102 wichtigen Steuerungen aufweist, und in eine zweite Einheit 448 "System" unterteilt, die alle weiteren, systemnotwendigen Einheiten der Mobilvorrichtung 102 repräsentiert.

In der Mobilvorrichtung 102 sind Funktionalitätsdaten 450 als lokale Skripte vor einem Laden der Funktionalitätsdaten der zugeordneten Funktionalitäten vorhanden. Diese Funktionalitätsdaten 450 sind als Tabellen mit Binärwerten ausgebildet. Die Funktionalitätsdaten 452 weisen Anweisung oder Algorithmen zum Ausführen der bereitgestellten Funktionalität, Referenzierungen oder Adressierungen von Teilen der Funktionalitätsdaten 450, 452, und zusätzliche Anzeigedaten (beispielsweise graphische Symbole, Icons, Bilder und/oder Text) auf, die adressiert werden können und während eines Ausführens der Funktionalität einem Benutzer der Mobilvorrichtung 102 in der Bedienoberfläche der Funktionalität angezeigt werden können. Ferner weisen die Funktonalitätsdaten 452 Anweisungen auf, durch die festgelegt ist, wie die von der Festvorrichtung 104 empfangenen Funktionalitätsdatendaten 452 in die in der Mobilvorrichtung 102 bereits vorhandenen Funktionalitätsdaten 450 eingebunden werden.

Ferner sind in der Mobilvorrichtung 102 Ansprechdaten 458 ("DSD Static Methods") gespeichert, die in der Mobilvorrichtung 102 verwendet werden, um beispielweise eine von der Mobilvorrichtung unterstützte Konvertierungsmethode zur Konvertierung des jeweils benutzten Protokollformats in das jeweilige Anzeigeformat, das in den vorhandenen Funktionalitätsdaten 350 definiert ist, anzusprechen. Ein anderes Beispiel kann die Anzeigemethode sein, ob beispielsweise ein neuer Eintrag als Textfeld, Radio Button oder Schieberegler in der Bedienoberfläche ausgeprägt werden soll. Die in der Mobilvorrichtung 102 vorhandenen Funktionalitätsdaten 450 und die zu implementieren Funktionalitätsdaten 452 enthalten entsprechende Verweise oder Referenzierungen auf die Ansprechdaten 458. Die Funktionalitätsdaten 452 und die Ansprechdaten 458 sind bidirektional logisch miteinander verknüpft, während die in der Mobilvorrichtung 102 bereits vorhandenen Funktionalitätsdaten 450 logisch auf die Funktionalitätsdaten 452 zugreifen.

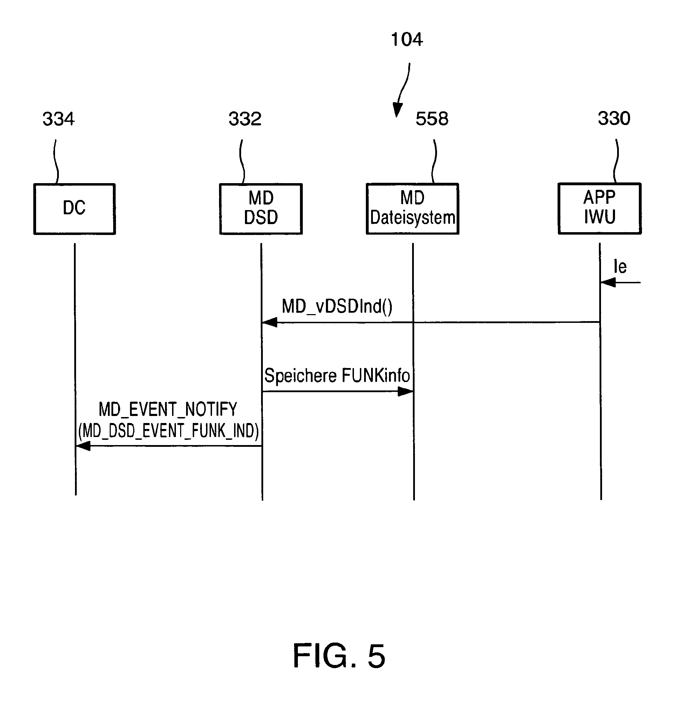

Fig. 5 bis 7 zeigen Flussdiagramme, die ein Verfahren zum Bereitstellen einer Funktionalität in einer Mobilvorrichtung 102 gemäß einem weiteren exemplarischen Ausführungsbeispiel der Erfindung zeigen. Fig. 5 zeigt ein Laden und Speichern der Funktionalitätsdaten 452, Fig. 6 zeigt ein Implementieren der Funktionalitätsdaten 452, und Fig. 7 zeigt ein Freigeben eines Speichers nach einem Implementieren der Funktionalitätsdaten 452.

Das Laden der Funktionalitätsdaten 452 erfolgt unmittelbar nach einem Anmelden der Mobilvorrichtung 102 bei der Festvorrichtung 104. Vor dem Anmelden der Mobilvorrichtung 102 bei der Festvorrichtung 104 war die Mobilvorrichtung 102 noch nicht kommunikativ mit der Festvorrichtung 104 gekoppelt. Durch das Anmelden bei der Festvorrichtung 104 authentifiziert sich die Mobilvorrichtung 102 bei der Festvorrichtung 104 dauerhaft für eine Kommunikation mit der Festvorrichtung 104.

Die Schnittstelleneinheit 330 der Mobilvorrichtung 102 empfängt die Funktionalitätsdaten 452 in einer "Ie" bezeichneten Nachricht und sendet eine entsprechende Information und die geladenen Funktionalitätsdaten 452 in einer die Anweisung "MD_vDSDInd()" aufweisenden Nachricht an die Austauschverwaltungseinheit 332. Daraufhin sendet die Austauschverwaltungseinheit 332 in einer die Anweisung "Speichere FUNK info" und die geladenen Funktionalitätsdaten 452 aufweisenden Nachricht an ein mit "MD Dateisystem" bezeichnetes Dateisystem 558, in dem die Funktionalitätsdaten 452 gespeichert werden. Das Dateisystem 458 stellt einen flüchtigen Speicher dar und ist in der Austauschverwaltungseinheit 332 integriert. Alternativ kann das Dateisystem 558 eine eigene, weitere Komponente der Mobilvorrichtung 102 sein. Anschließend informiert die Austauschverwaltungseinheit 332 in einer den Inhalt "MD-EVENT_NOTIFY (MD_DSD-EVENT-FUNK-IND)" aufweisenden Nachricht die Steuereinheit 334, dass die Funktionalitätsdaten 452 geladen und in dem Dateisystem 558 hinterlegt sind.

Fig. 6 zeigt das Implementieren der in dem Dateisystem 558 abgelegten Funktionalitätsdaten 452 in die in der Mobilvorrichtung 102 bereits vorhandenen Funktionalitätsdaten 450. Dies kann in Anschluss an das in Fig. 4 gezeigte Laden der Funktionalitätsdaten 452 oder zeitlich versetzt bei einem Synchronisieren mit der Festvorrichtung 104 beispielsweise nach einem Basiswechsel zurück zu der Festvorrichtung 104 erfolgen.

Während des Synchronisierens ist die Mobilvorrichtung 102 kommunikativ mit der Festvorrichtung 104 gekoppelt, steht mit dieser aber nicht in einer aktiven Kommunikationsverbindung, wie bei einem Telefonat. Die Steuereinheit 334 fordert die Funktionalitätsdaten 452 von dem Dateisystem 558 an und empfängt diese über die Austauschverwaltungseinheit 332. Dazu werden entsprechende Nachrichten "MD_bDSDFUNKRequest (Start/Cont)", "Lese-Anfrage" , "Lese-Bestätigung", "MD_EVENT_NOTIFY (MD_DSD_EVENT_FUNK_IND)" und "MD_bDSDFUNKGet()" zwischen den beteiligten Komponenten 332, 334, 558 ausgetauscht. Das Holen der Funktionalitätsdaten 452 von der Austauschverwaltungseinheit 332 wird so lange ausgeführt, bis alle e Funktionalitätsdaten 452, die e von dem Dateisystem 558 der Austauschverwaltungseinheit 332 bereitgestellt worden sind, von der Austauschverwaltungseinheit 332 an die Steuereinheit 334 übergeben worden sind.

Fig. 7 zeigt das Freigeben des Dateisystems 558 nach dem in Fig. 6 gezeigten Implementieren der Funktionalitätsdaten 452 in der Mobilvorrichtung 102. Hierbei sendet die Steuereinheit 334 eine entsprechende Anfrage mit der Anweisung "MD_BDSDContentFree (Pointer auf Binary)" an die Austauschverwaltungseinheit 332, so dass ein entsprechender Verweis auf die in dem Dateisystem 558 abgelegten Funktionalitätsdaten 452 gelöscht wird.

In Folgenden wird die in Fig. 1 gezeigte Festvorrichtung gemäß einem exemplarischen Ausführungsbeispiel der Erfindung beschrieben. Die Festvorrichtung 104 weist eine Einheit zum Empfangen einer Anfrage von der Mobilvorrichtung 102 zum Laden von einer Funktionalität zugeordneten Funktionalitätsdaten 452 von der Festvorrichtung 104 auf. Die Festvorrichtung 104 weist ferner eine Einheit zum Senden der angefragten Funktionalitätsdaten 452 auf. Diese Einheiten sind einstückig als Sender/Empfänger-Schnittstelleneinheit zum Senden von Information an und zum Empfangen von Information von der Mobilvorrichtung 102 ausgebildet. Ferner weist die Festvorrichtung einen Speicher auf, in dem Gruppen von Funktionalitätsdaten gespeichert sind, die jeweils in Übereinstimmung mit Generationsnummern von Mobilvorrichtungen definiert sind. Die Festvorrichtung 104 ist konfiguriert, dass die Festvorrichtung 104 den Inhalt der Vielzahl von Funktionalitätsdaten und den Inhalt der definierten Gruppen nicht kennt. Eine Einheit der Festvorrichtung 104 zum Auswählen der Funktionalitätsdaten aus der Vielzahl den Funktionalitätsdaten ist konfiguriert, die entsprechende Gruppe mit Funktionalitätsdaten in Antwort auf eine empfangene Generationsnummer der Mobilvorrichtung 102 auszuwählen.

Ergänzend ist darauf hinzuweisen, dass "aufweisend" keine anderen Elemente oder Schritte ausschließt und die Verwendung des Artikels "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Bereitstellen einer Funktionalität in einer Mobilkommunikationsvorrichtung (102), wobei mit der Funktionalität der Mobilkommunikationsvorrichtung (102) eine zugeordnete Funktionalität einer Festkommunikationsvorrichtung (104) ansprechbar ist, wobei das Verfahren von der Mobilkommunikationsvorrichtung (102) ausgeführt wird, wobei das Verfahren aufweist:
- Laden (116, 216) von der Funktionalität der Mobilkommunikationsvorrichtung (102) zugeordneten Funktionalitätsdaten (452), und
- Bereitstellen (117) der den Funktionalitätsdaten (452) zugeordneten Funktionalität in der Mobilkommunikationsvorrichtung (102),
wobei das Verfahren ferner aufweist:
- Anfragen (114a, 214a) von Information über von der Festkommunikationsvorrichtung (104) bereitgestellte Funktionalitätsdaten, und
- Vergleichen (115, 215) der angefragten Information über die von der Festkommunikationsvorrichtung (104) bereitgestellten Funktionalitätsdaten mit Information über eine Art der Mobilkommunikationsvorrichtung (102),
wobei das Laden (116, 216) der Funktionalitätsdaten (452) basierend auf dem Vergleichen (115, 215) ausgeführt wird.

2. Verfahren nach Anspruch 1, wobei das Verfahren ferner aufweist:
- Anfragen (112a, 212a) von Information über eine Art der Festkommunikationsvorrichtung (104), und
- Speichern (112b, 212b) der angefragten Information über die Art der Festkommunikationsvorrichtung (104).

3. Verfahren nach Anspruch 1 oder 2, wobei das Verfahren ferner aufweist:
- Rücksetzen (223) von in der Mobilkommunikationsvorrichtung (102) vorhandenen Funktionalitätsdaten (450) von zugeordneten Funktionalitäten in einen herstellungsbedingten Ausgangszustand vor dem Laden (116, 216) der Funktionalitätsdaten (452).

4. Verfahren nach einem der Ansprüche 1 bis 3, wobei das Laden (116, 216) der Funktionalitätsdaten (452) in Übereinstimmung mit Eigenschaften der Mobilkommunikationsvorrichtung (102) ausgeführt wird.

5. Verfahren nach einem der Ansprüche 1 bis 4, wobei das Laden (116, 216) Empfangen (116b) der Funktionalitätsdaten (452) von der Festkommunikationsvorrichtung (104) oder Empfangen einer Anweisung zum Laden der Funktionalitätsdaten (452) von einer Kommunikationsvorrichtung von der Festkommunikationsvorrichtung 104 und Empfangen der Funktionalitätsdaten (452) von der Kommunikationsvorrichtung aufweist.

6. Verfahren nach einem der Ansprüche 1 bis 5, wobei das Laden (116, 216) der Funktionalitätsdaten (452) bei einem erstmaligen Aufbau einer Kommunikationsverbindung mit der Festkommunikationsvorrichtung (104), bei einem Synchronisieren der Mobilkommunikationsvorrichtung (102) mit der Festkommunikationsvorrichtung (104) oder bei dem Aufbau einer aktiven Kommunikationsverbindung zwischen der Mobilkommunikationsvorrichtung (102) und der Festkommunikationsvorrichtung (104) ausgeführt wird.

7. Verfahren nach einem der Ansprüche 1 bis 6, wobei die Funktionalitätsdaten (452) in Übereinstimmung mit einem Format und/oder einer Sprache der in der Mobilkominunikationsvorrichtung (102) vorhandenen Funktionalitätsdaten (450) und/oder einem von der Mobilkommunikationsvorrichtung (102) unterstütztem Protokoll geladen werden.

8. Verfahren nach einem der Ansprüche 1 bis 7, wobei das Bereitstellen (117, 217) der Funktionalität ein Implementieren (117, 217) der geladenen Funktionalitätsdaten (352) in Funktionalitätsdaten (450) von zugeordneten Funktionalitäten aufweist, die in der Mobilkommunikationsvorrichtung (102) vorhandenen sind.

9. Verfahren zum Bereitstellen einer Funktionalität für eine Mobilkommunikationsvorrichtung (102), wobei mit der Funktionalität der Mobilkommunikationsvorrichtung (102) eine zugeordnete Funktionalität einer Festkommunikationsvorrichtung (104) ansprechbar ist, wobei das Verfahren durch die Festkommunikationsvorrichtung (104) ausgeführt wird, wobei das Verfahren aufweist:
- Empfangen (116a, 216a) einer Anfrage von der Mobilkommunikationsvorrichtung (102) zum Laden von der Funktionalität der Mobilkommunikationsvorrichtung (102) zugeordneten Funktionalitätsdaten (452), und
- Bereitstellen der angefragten Funktionalitätsdaten (452) für die Mobilkommunikationsvorrichtung (102) basierend auf der Anfrage,
wobei das Verfahren ferner aufweist:
- Empfangen (114a, 214a) einer Anfrage von Information über von der Festkommunikationsvorrichtung (104) bereitgestellte Funktionalitätsdaten, und
- Senden (115, 215) der angefragten Information über die von der Festkommunikationsvorrichtung (104) bereitgestellten Funktionalitätsdaten zum Vergleichen (115, 215) der angefragten Information mit Information über eine Art der Mobilkommunikationsvorrichtung (102),
wobei das Bereitstellen (116, 216) der Funktionalitätsdaten (452) basierend auf dem Vergleichen (115, 215) ausgeführt wird.

10. Verfahren nach Anspruch 9, wobei das Verfahren ferner aufweist:
- Auswählen (1117) einer Gruppe aus einer Vielzahl von Gruppen, die Funktionalitätsdaten für jeweils unterschiedliche Arten von Mobilkommunikationsvorrichtungen aufweisen.

11. Verfahren nach Anspruch 9 oder 10, wobei das Bereitstellen der Funktionalitätsdaten (452) Senden (1116b, 216b) der Funktionalitätsdaten (452) an die Mobilkommunikationsvorrichtung (102) aufweist.

12. Verfahren nach Anspruch 9 oder 10, wobei das Bereitstellen der Funktionalitätsdaten (452) Senden einer Anweisung zum Laden der Funktionalitätsdaten (452) von einer Kommunikationsvorrichtung an die Mobilkommunikationsvorrichtung (102) aufweist.

13. Mobilkommunikationsvorrichtung (102) zum Bereitstellen einer Funktionalität, wobei mit der Funktionalität der Mobilkommunikationsvorrichtung (102) eine zugeordnete Funktionalität einer Festkommunikationsvorrichtung (104) ansprechbar ist, wobei die Mobilkommunikationsvorrichtung (102) aufweist:
- eine Einheit (330) zum Laden von der Funktionalität der Mobilkommunikationsvorrichtung (102) zugeordneten Funktionalitätsdaten (452), und
- eine Einheit (334) zum Bereitstellen der den Funktionalitätsdaten (452) zugeordneten Funktionalität in der Mobilkommunikationsvorrichtung (102),
wobei die Mobilkommunikationsvorrichtung (102) dazu eingerichtet ist, Information über von der Festkommunikationsvorrichtung (104) bereitgestellte Funktionalitätsdaten (452) anzufragen und die angefragte Information über die von der Festkommunikationsvorrichtung (104) bereitgestellten Funktionalitätsdaten (452) mit Information über eine Art der Mobilkommunikationsvorrichtung (102) zu vergleichen, wobei die Mobilkommunikationsvorrichtung (102) dazu eingerichtet ist, das Laden der Funktionalitätsdaten (452) basierend auf dem Vergleichen auszuführen.

14. Festkommunikationsvorrichtung (104) zum Bereitstellen einer Funktionalität für eine Mobilkommunikationsvorrichtung (102), wobei mit der Funktionalität der Mobilkommunikationsvorrichtung (102) eine zugeordnete Funktionalität der Festkommunikationsvorrichtung (104) ansprechbar ist, wobei die Festkommunikationsvorrichtung (104) aufweist:
- eine Einheit zum Empfangen einer Anfrage von der Mobilkommunikationsvorrichtung (102) zum Laden von der Funktionalität der Mobilkommunikationsvorrichtung (102) zugeordneten Funktionalitätsdaten (452), und
- eine Einheit zum Bereitstellen der angefragten Funktionalitätsdaten (452) basierend auf der Anfrage,
wobei die Festkommunikationsvorrichtung (104) dazu eingerichtet ist, eine Anfrage von Information über von der Festkommunikationsvorrichtung (104) bereitgestellte Funktionalitätsdaten (452) zu empfangen und die angefragte Information über die von der Festkommunikationsvorrichtung (104) bereitgestellten Funktionalitätsdaten zum Vergleichen der angefragten Information mit Information über eine Art der Mobilkommunikationsvorrichtung (102) zu senden, wobei die Festkommunikationsvorrichtung (104) dazu eingerichtet ist, die Funktionalitätsdaten (452) basierend auf dem Vergleichen bereitzustellen.

15. Computer-Programm, das, wenn es von einem Prozessor ausgeführt wird, dazu geeignet ist, ein Verfahren zum Bereitstellen einer Funktionalität in einer Mobilkommunikationsvorrichtung (102) oder ein Verfahren zum Bereitstellen einer Funktionalität für eine Mobilkommunikationsvorrichtung (102) nach einem der Ansprüche 1 bis 12 auszuführen oder zu steuern.

## Claims

1. A method for providing a functionality in a mobile communication device (102), wherein, by means of the functionality of the mobile communication device (102), an associated functionality of a fixed communication device (104) can be addressed, wherein the method is carried out by the mobile communication device (102), wherein the method comprises the following steps:
- loading (116, 216) functionality data (452) associated with the functionality of the mobile communication device (102), and
- providing (117) the functionality associated with the functionality data (452) in the mobile communication device (102),
wherein the method further comprises the following steps:
- requesting (114a, 214a) information concerning functionality data provided by the fixed communication device (104), and
- comparing (115, 215) the requested information concerning the functionality data provided by the fixed communication device (104) with information concerning a type of the mobile communication device (102),
wherein the loading (116, 216) of the functionality data (452) is carried out based on the comparison (115, 215).

2. The method according to Claim 1, wherein the method further comprises the following steps:
- requesting (112a, 212a) information concerning a type of the fixed communication device (104), and
- storing (112b, 212b) the requested information concerning the type of fixed communication device (104).

3. The method according to claim 1 or 2, wherein the method further comprises the following step:
- resetting (223) functionality data (450) provided in the mobile communication device (102) in a production-induced starting state before the loading (116, 216) of the functionality data (452).

4. The method according to one of Claims 1 to 3, wherein the loading (116, 216) of the functionality data (452) is carried out in accordance with properties of the mobile communication device (102).

5. The method according to one of Claims 1 to 4, wherein the loading (116, 216) comprises receiving (116b) the functionality data (452) from the fixed communication device (104) or receiving an instruction to load the functionality data (452) from a communication device of the fixed communication device (104) and receiving the functionality data (452) from the communication device.

6. The method according to one of Claims 1 to 5, wherein the loading (116, 216) of the functionality data (452) is carried out when a communication link to the fixed communication device (104) is established for the first time, when the mobile communication device (102) is synchronised with the fixed communication device (104), or when an active communication link is established between the mobile communication device (102) and the fixed communication device (104).

7. The method according to one of Claims 1 to 6, wherein the functionality data (452) are loaded in accordance with a format and/or a language of the functionality data (450) provided in the mobile communication device (102) and/or in accordance with a protocol supported by the mobile communication device (102).

8. The method according to one of Claims 1 to 7, wherein the provision (117, 217) of the functionality comprises an implementation (117, 217) of the loaded functionality data (352) in functionality data (450) of associated functionalities that are provided in the mobile communication device.

9. A method for providing a functionality for a mobile communication device (102), wherein, by means of the functionality of the mobile communication device (102), an associated functionality of a fixed communication device (104) can be addressed, wherein the method is carried out by the fixed communication device (104), wherein the method comprises the following steps:
- receiving (116a, 216a) a request from the mobile communication device (102) to load functionality data (452) associated with the functionality of the mobile communication device (102), and
- providing the requested functionality data (452) for the mobile communication device (102) based on the request, wherein the method further comprises the following steps:
- receiving (114a, 214a) a request of information concerning functionality data provided by the fixed communication device (104), and
- sending (115, 215) the requested information concerning the functionality data provided by the fixed communication device (104) for comparison (115, 215) of the requested information with information concerning a type of mobile communication device (102),
wherein the provision (116, 216) of the functionality data (452) is carried out based on the comparison (115, 215).

10. The method according to Claim 9, wherein the method further comprises the following step:
- selecting (117) a group from a multiplicity of groups that each comprise functionality data for different types of mobile communication devices.

11. The method according to Claim 9 or 10, wherein the provision of the functionality data (452) comprises sending (116b, 216b) the functionality data (452) to the mobile communication device (102).

12. The method according to Claim 9 or 10, wherein the provision of the functionality data (452) comprises sending an instruction to load the functionality data (452) from a communication device to the mobile communication device (102).

13. The mobile communication device (102) for providing a functionality, wherein, by means of the functionality of the mobile communication device (102), an associated functionality of a fixed communication device (104) can be addressed, wherein the mobile communication device (102) comprises:
- a unit (330) for loading functionality data (452) associated with the functionality of the mobile communication device (102), and
- a unit (334) for providing the functionality associated with the functionality data (452) in the mobile communication device (102),
wherein the mobile communication device (102) is designed to request information concerning functionality data (452) provided by the fixed communication device (104) and to compare the requested information concerning the functionality data (452) provided by the fixed communication device (104) with information concerning a type of the mobile communication device (102), wherein the mobile communication device (102) is designed to carry out the loading of the functionality data (452) based on the comparison.

14. A fixed communication device (104) for providing a functionality for a mobile communication device (102), wherein, by means of the functionality of the mobile communication device (102), an associated functionality of the fixed communication device (104) can be addressed, wherein the fixed communication device (104) comprises:
- a unit for receiving a request from the mobile communication device (102) for loading functionality data (452) associated with the functionality of the mobile communication device (102), and
- a unit for providing the requested functionality data (452) based on the request,
wherein the fixed communication device (104) is designed to receive a request of information concerning functionality data (452) provided by the fixed communication device (104) and to send the requested information concerning the functionality data provided by the fixed communication device (104) for comparison of the requested information with information concerning a type of the mobile communication device (102), wherein the fixed communication device (104) is designed to provide the functionality data (452) based on the comparison.

15. A computer program that, when run by a processor, is suitable for carrying out or for controlling a method for providing a functionality in a mobile communication device (102) or a method for providing a functionality for a mobile communication device (102) according to one of Claims 1 to 12.

## Revendications

1. Procédé pour la mise à disposition d'une fonctionnalité dans un dispositif de communication mobile (102), dans lequel la fonctionnalité du dispositif de communication mobile (102) permet d'interroger une fonctionnalité correspondante d'un dispositif de communication fixe (104), dans lequel le procédé est exécuté par le dispositif de communication mobile (102), dans lequel le procédé comprend :
- le chargement (116, 216) de données de fonctionnalité (452) attribuées à la fonctionnalité du dispositif de communication mobile (102),
- la mise à disposition (117) de la fonctionnalité attribuée aux données de fonctionnalité (452) dans le dispositif de communication mobile (102),
dans lequel le procédé comprend en outre :
- la demande (114a, 214a) d'information concernant des données de fonctionnalité mises à disposition par le dispositif de communication fixe (104), et
- la comparaison (115, 215) de l'information demandée concernant des données de fonctionnalité mises à disposition par le dispositif de communication fixe (104) avec l'information concernant un type du dispositif de communication mobile (102),
dans lequel le chargement (116, 216) des données de fonctionnalité (452) est effectué sur la base de la comparaison (115, 215).

2. Procédé selon la revendication 1, dans lequel le procédé comprend en outre :
- la demande (112a, 212a) d'information concernant un type du dispositif de communication fixe (104), et
- l'enregistrement (112b, 212b) de l'information demandée concernant le type du dispositif de communication fixe (104) .

3. Procédé selon la revendication 1 ou 2, dans lequel le procédé comprend en outre :
- la réinitialisation (223) de données de fonctionnalité (450) disponibles dans le dispositif de communication mobile (102) et relatives à des fonctionnalités correspondantes, dans un état initial dépendant de la fabrication, avant le chargement (116, 216) des données de fonctionnalité (452).

4. Procédé selon l'une des revendications 1 à 3, dans lequel le chargement (116, 216) des données de fonctionnalité (452) est effectué conformément à des propriétés du dispositif de communication mobile (102).

5. Procédé selon l'une des revendications 1 à 4, dans lequel le chargement (116, 216) comprend la réception (116b) des données de fonctionnalité (452) du dispositif de communication fixe (104) ou la réception d'une instruction pour le chargement des données de fonctionnalité (452) d'un dispositif de communication du dispositif de communication fixe 104 et la réception des données de fonctionnalité (452) du dispositif de communication.

6. Procédé selon l'une des revendications 1 à 5, dans lequel le chargement (116, 216) des données de fonctionnalité (452) est effectué lors d'un premier établissement d'une liaison de communication avec le dispositif de communication fixe (104), lors d'une synchronisation du dispositif de communication mobile (102) avec le dispositif de communication fixe (104) ou lors de l'établissement d'une liaison de communication active entre le dispositif de communication mobile (102) et le dispositif de communication fixe (104).

7. Procédé selon l'une des revendications 1 à 6, dans lequel les données de fonctionnalité (452) sont chargées conformément à un format et/ou à un langage des données de fonctionnalité (450) disponibles dans le dispositif de communication mobile (102) et/ou à un protocole supporté par le dispositif de communication mobile (102).

8. Procédé selon l'une des revendications 1 à 7, dans lequel la mise à disposition (117, 217) de la fonctionnalité comprend une mise en oeuvre (117, 217) des données de fonctionnalité (352) chargées, dans des données de fonctionnalité (450) de fonctionnalités correspondantes disponibles dans le dispositif de communication mobile (102) .

9. Procédé pour la mise à disposition d'une fonctionnalité pour un dispositif de communication mobile (102), dans lequel la fonctionnalité du dispositif de communication mobile (102) permet d'interroger une fonctionnalité correspondante d'un dispositif de communication fixe (104), le procédé étant exécuté par le dispositif de communication mobile (102), dans lequel le procédé comprend :
- la réception (116a, 216a) d'une demande du dispositif de communication mobile (102) pour le chargement de données de fonctionnalité (452) attribuées à la fonctionnalité du dispositif de communication mobile (102), et
- la mise à disposition des données de fonctionnalité (452) demandées pour le dispositif de communication mobile (102), sur la base de la demande,
dans lequel le procédé comprend en outre :
- la réception (114a, 214a) d'une demande d'information concernant des données de fonctionnalité mises à disposition par le dispositif de communication fixe (104), et
- l'envoi (115, 215) de l'information demandée concernant les données de fonctionnalité mises à disposition par le dispositif de communication fixe (104), en vue de la comparaison (115, 215) de l'information demandée avec une information concernant un type du dispositif de communication mobile (102),
dans lequel la mise à disposition (116, 216) des données de fonctionnalité (452) est effectuée sur la base de la comparaison (115, 215).

10. Procédé selon la revendication 9, dans lequel le procédé comprend en outre :
- la sélection (1117) d'un groupe parmi une multitude de groupes comprenant des données de fonctionnalité pour différents types de dispositifs de communication mobiles.

11. Procédé selon la revendication 9 ou 10, dans lequel la mise à disposition des données de fonctionnalité (452) comprend l'envoi (116b, 216b) des données de fonctionnalité (452) au dispositif de communication mobile (102).

12. Procédé selon la revendication 9 ou 10, dans lequel la mise à disposition des données de fonctionnalité (452) comprend l'envoi d'une instruction pour le chargement des données de fonctionnalité (452) d'un dispositif de communication au dispositif de communication mobile (102).

13. Dispositif de communication mobile (102) pour la mise à disposition d'une fonctionnalité, dans lequel la fonctionnalité du dispositif de communication mobile (102) permet d'interroger une fonctionnalité correspondante d'un dispositif de communication fixe (104), le dispositif de communication mobile (102) comprenant :
- une unité (330) pour le chargement des données de fonctionnalité (452) attribuées à la fonctionnalité du dispositif de communication mobile (102), et
- une unité (334) pour la mise à disposition de la fonctionnalité attribuée aux données de fonctionnalité (452), dans le dispositif de communication mobile (102), dans lequel le dispositif de communication mobile (102) est conçu pour demander une information concernant des données de fonctionnalité (452) mises à disposition par le dispositif de communication fixe (104), et pour comparer l'information demandée concernant les données de fonctionnalité (452) mises à disposition par le dispositif de communication fixe (104) avec une information concernant un type du dispositif de communication mobile (102), dans lequel le dispositif de communication mobile (102) est conçu pour effectuer le chargement des données de fonctionnalité (452) sur la base de la comparaison.

14. Dispositif de communication fixe (104) pour la mise à disposition d'une fonctionnalité pour un dispositif de communication mobile (102), dans lequel la fonctionnalité du dispositif de communication mobile (102) permet d'interroger une fonctionnalité correspondante du dispositif de communication fixe (104), dans lequel le dispositif de communication fixe (104) comprend :
- une unité pour la réception d'une demande du dispositif de communication mobile (102) pour le chargement des données de fonctionnalité (452) attribuées à la fonctionnalité du dispositif de communication mobile (102), et
- une unité pour la mise à disposition des données de fonctionnalité (452) demandées, sur la base de la demande, dans lequel le dispositif de communication fixe (104) est conçu pour recevoir une demande d'information concernant des données de fonctionnalité (452) mises à disposition par le dispositif de communication fixe (104), et pour envoyer l'information demandée concernant les données de fonctionnalité (452) mises à disposition par le dispositif de communication fixe (104), en vue de la comparaison de l'information demandée avec une information concernant un type du dispositif de communication mobile (102), dans lequel le dispositif de communication fixe (104) est conçu pour mettre à disposition les données de fonctionnalité (452) sur la base de la comparaison.

15. Programme informatique approprié pour exécuter ou commander un procédé pour la mise à disposition d'une fonctionnalité dans un dispositif de communication mobile (102) ou un procédé pour la mise à disposition d'une fonctionnalité pour un dispositif de communication mobile (102) selon l'une des revendications 1 à 12, lorsqu'il est exécuté par un processeur.
